# EUROPÄISCHE PATENTSCHRIFT

(11) **EP 4 335 616 B1**
(45) Veröffentlichungstag und Bekanntmachung des Hinweises auf die Patenterteilung: **16.07.2025**
(21) Anmeldenummer: 23194549.4
(22) Anmeldetag: 31.08.2023
(51) Int. Cl.: B29C 49/42, B29C 49/78, B29C 49/06, B29C 49/12, B29K 67/00, B29L 31/00

(54) **VERFAHREN UND VORRICHTUNG ZUM UMFORMEN VON KUNSTSTOFFVORFORMLINGEN ZU KUNSTSTOFFBEHÄLTNISSEN MIT ZWISCHENBLASDRUCKSTEUERUNG**
METHOD AND DEVICE FOR REFORMING PLASTIC PREFORMS INTO PLASTIC CONTAINERS WITH INTERMEDIATE BLOW PRESSURE CONTROL
PROCÉDÉ ET DISPOSITIF DE FORMAGE DE PRÉFORMES EN MATIÈRE PLASTIQUE EN RÉCIPIENTS EN MATIÈRE PLASTIQUE À L'AIDE D'UNE COMMANDE DE PRESSION DE SOUFFLAGE INTERMÉDIAIRE

(30) Priorität: 08.09.2022 DE 102022122883
(43) Veröffentlichungstag der Anmeldung: 13.03.2024
(73) Patentinhaber: Krones AG, 93073 Neutraubling (DE)
(72) Erfinder: Hengl, Benedikt, 93073 Neutraubling (DE); Vogler, Daniel, 93073 Neutraubling (DE); Meier, Dominik, 93073 Neutraubling (DE); Kulzer, Markus, 93073 Neutraubling (DE)
(74) Vertreter: Hannke Bittner & Partner mbB Regensburg

(56) Entgegenhaltungen:
- EP-A2- 1 974 892
- EP-B1- 2 497 619
- DE-A1- 102012 110 023
- US-A1- 2010 171 243
- US-A1- 2016 136 868

## Beschreibung

Die vorliegende Erfindung betrifft ein Verfahren und eine Vorrichtung zum Umformen von Kunststoffvorformlingen zu Kunststoffbehältnissen. Derartige Verfahren und Vorrichtungen sind aus dem Stand der Technik seit langem bekannt, wie beispielsweise in der DE 10 2012 110023 A1, US 2016/136868A1, EP 2 497 619 B1, US 2010/171243 A1 und EP 1 974 892 A2 beschrieben. Dabei werden erwärmte Kunststoffvorformlinge durch Beaufschlagung mit einem fließfähigen Medium, insbesondere mit Druckluft zu Kunststoffbehältnissen und insbesondere Kunststoffflaschen umgeformt.

Diese Umformungsprozesse sind im Laufe der Zeit stets aufwendiger geworden, da nicht nur zufriedenstellende Behältnisse erzeugt werden sollen, sondern dabei möglichst auch Druckluft und damit Energie eingespart werden soll.

Im Stand der Technik ist es bekannt, dass die Kunststoffvorformlinge mit mehreren Druckstufen bzw. Druckniveaus beaufschlagt werden, um sie zu expandieren. So ist bekannt, dass zunächst ein Vorblasdruck verwendet wird, anschließend eine Zwischenblasdruckstufe und schließlich ein Fertigblasdruck, um das Behältnis vollständig auszuformen und zu stabilisieren.

Im Stand der Technik ist dabei eine Zwischenblasstufe vorgesehen und der Bediener gibt einen Solldruck vor, der für diese Blasstufe verwendet werden soll. Ein entsprechendes Druckreservoir wie beispielsweise ein Ringkanal hängt dabei stets in einer übergeordneten Versorgungsbaugruppe, welche über einen Domdruckminderer und ein Proportionalventil Frischluft nachfördern kann und welche weiterhin über eine Entlastungeinheit verfügen kann, welche Luft aus dem Druckreservoir gegen Atmosphäre entlasten kann.

Ein Problem besteht hierbei darin, dass der energetisch perfekte Sollwert dem Maschinenbediener nicht bekannt ist. Der ideale Druck wird in der Praxis meist anhand einer Faustformel nur annäherungsweise ermittelt. Daneben ist es im Stand der Technik nötig, sämtliche Druckreservoirs und auch diejenigen für die Zwischendruckstufe vorzubefüllen. Es hat sich auch gezeigt, dass die Luftrückgewinnungsregelung für zusätzliche Zwischenblasstufen nicht mehr praktikabel ist. Ideale Drücke für den Zwischendruck sind nur über umfangreiche Berechnungen zu ermitteln.

Der vorliegenden Erfindung liegt daher die Aufgabe zugrunde, derartige Vorrichtungen und Verfahren einerseits effizienter zu gestalten und andererseits kostengünstiger auszugestalten. Dies wird erfindungsgemäß durch die Gegenstände der unabhängigen Patentansprüche erreicht. Vorteilhafte Ausführungsformen und Weiterbildungen sind Gegenstand der Unteransprüche.

Bei einem erfindungsgemäßen Verfahren zum Umformen von Kunststoffvorformlingen zu Kunststoffbehältnissen transportiert eine Transporteinrichtung die Kunststoffvorformlinge entlang eines vorgegebenen Transportpfads, wobei die Transporteinrichtung einen drehbaren Transportträger aufweist, an dem eine Vielzahl von Umformungsstationen zum Umformen der Kunststoffvorformlinge zu den Kunststoffbehältnissen angeordnet ist und wobei die Umformungsstationen jeweils Beaufschlagungseinrichtungen aufweisen, welche die Kunststoffvorformlinge mit dem fließfähigen Medium beaufschlagen und wobei die Vorrichtung wenigstens drei Druckreservoirs und insbesondere Druckluftreservoirs aufweist, welche das fließfähige und insbesondere gasförmige Medien speichern und die Kunststoffvorformlinge in einem ersten Betriebsmodus zu ihrer Expansion mit einem ersten in dem ersten Druckreservoir gespeicherten Druckniveau, wenigstens einem zweiten in dem zweiten Druckreservoir gespeicherten Druckniveau und einem dritten in den dritten Druckreservoir gespeicherten Druckniveau beaufschlagt werden, wobei das zweite Druckniveau höher ist als das erste Druckniveau und das dritte Druckniveau höher ist als das zweite Druckniveau.

Besonders bevorzugt wird die Vorrichtung wenigstens zeitweise in einem zweiten Betriebsmodus betrieben, wobei sich dieser zweite Betriebsmodus durch ein in dem zweiten Druckreservoir herrschendes Druckniveau von dem ersten Betriebsmodus unterscheidet.

Es wird daher vorgeschlagen, dass zwei verschiedene Betriebsmodi zur Verfügung stehen, bzw. wenigstens zwei Betriebsmodi, welche sich insbesondere durch die Ausgestaltung des zweiten Druckniveaus, bei dem es sich bevorzugt um einen Zwischenblasdruck handelt, unterscheiden.

Besonders bevorzugt, handelt es sich bei dem ersten Druckniveau um einen Vorblasdruck, im Folgenden auch mit P1 bezeichnet, mit welchem die Behältnisse zu Beginn der Expansion vorgeblasen werden. Bei dem zweiten Druckniveau handelt es sich besonders bevorzugt um einen (ersten) Zwischenblasdruck, im Folgenden auch mit Pi1 bezeichnet und bei dem dritten Druckniveau handelt es sich besonders bevorzugt um einen Fertigblasdruck (im Folgenden auch mit P2 bezeichnet), mit welchem das Behältnis vollständig ausgeformt und bevorzugt auch in einer ausgeformten Stellung eine Zeit lang gehalten wird. Bevorzugt werden die Behältnisse demnach mit einem ersten Druck (Vorblasdruck), einen dritten Druck (Fertigblasdruck) und mindestens einen zweiten Druck (Zwischenblasdruck) beaufschlagt bzw. sind ein erster Druck (Vorblasdruck), ein dritter Druck (Fertigblasdruck) und mindestens ein zweiter Druck (Zwischenblasdruck) vorhanden. Denkbar wären also n-Zwischenblasdrücke (Pi1, Pi2, PiN), so dass das Behältnis bevorzugt mit mehreren Zwischenblasdrücken beaufschlagt wird bzw. das Zwischenblasen auf mehreren Stufen erfolgt.

Bei einem weiteren bevorzugten Verfahren werden die Kunststoffvorformlinge auch mittels einer Reckeinheit gereckt. Zu diesem Zweck wird bevorzugt eine Reckstange in die Kunststoffvorformlinge eingeführt, um diese in deren Längsrichtung zu dehnen.

Bei einem weiteren bevorzugten Verfahren ist der zweite Betriebsmodus ein Startbetrieb der Vorrichtung bzw. ein Anfahrbetrieb, in dem diese in Betrieb genommen wird. Bevorzugt ist zumindest zu dem Beginn dieses zweiten Betriebsmodus, d. h. des Startbetriebs nur das erste Druckreservoir und das dritte Druckreservoir mit Druckluft gefüllt und/oder es sind nur das erste und das dritte Druckreservoir mit der Frischluft befüllt. Unter Frischluft wird dabei von außen kommende Luft verstanden, die beispielsweise durch einen Kompressor oder durch einen Drehverteiler zugeführt wird. Das zweite Druckreservoir ist bevorzugt am Anfang drucklos bzw. weist im Wesentlichen den Außendruck auf.

Besonders bevorzugt wird in keinem der beiden Betriebsmodi und insgesamt nicht an das zweite Druckreservoir Frischluft bzw. Luft von außen zugeführt.

Besonders bevorzugt werden in dem zweiten Betriebsmodus wenigstens zeitweise die Kunststoffvorformlinge nur mit dem ersten Druckniveau und dem zweiten Druckniveau beaufschlagt. Dies bedeutet, dass zu Beginn eines Prozesses lediglich das erste Druckniveau, d. h. der Vorblasdruck und das dritte Druckniveau, d. h. der Fertigblasdruck P2 auf das Behältnis gegeben werden bzw. der Kunststoffvorformling mit diesen Druckniveaus beaufschlagt wird.

Während dieser Anfangszeit steht in dem Zwischenblasdruckreservoir noch keine Druckluft zur Verfügung, sodass insoweit auch kein Zwischenblasen erfolgen kann.

Besonders bevorzugt wird in wenigstens einem Betriebsmodus und bevorzugt den beiden Betriebsmodi wenigstens zeitweise Druckluft von den Umformungsstationen und/oder den Kunststoffbehältnissen zurück in das zweite Druckreservoir geleitet. Sind zwei oder mehr Zwischenblasstufen vorhanden, so wird bevorzugt in jedes Druckreservoir für den Zwischenblasdruck Druckluft recycelt bzw. jede Zwischenblasstufe wird mit recycelter Druckluft versorgt..

Bei diesem bevorzugten Verfahren wird damit ein Recyclingprozess beschrieben, bei dem Blasluft wieder von den Behältnissen in einzelne Druckreservoirs, hier in das zweite Druckreservoir, geleitet wird. Auf diese Weise kann während der Anfahrtphase das zweite Druckreservoir mit Druckluft gefüllt werden, welche jedoch (insbesondere ausschließlich) von den zu behandelnden bzw. zu expandierenden Behältnissen stammt.

Ein derartiges Recycling von Blasluft bei der Expansion bzw. bei der Rückführung von Blasluft aus den Behältnissen ist an sich aus dem Stand der Technik bekannt. Die Erfindung schlägt hierzu vor, dieses Recycling auch gewissermaßen zum Erstbefüllen des zweiten Druckreservoirs zu verwenden.

Damit wird faktisch vorgeschlagen, dass das zweite Druckreservoir über das Recycling bzw. mithilfe des Druckluftrecyclings befüllt wird.

Bei einem weiteren bevorzugten Verfahren wird ein Druckniveau in dem zweiten Druckreservoir bestimmt und in Abhängigkeit von diesem Druckniveau in einem Betrieb von einem Betriebsmodus in einen anderen Betriebsmodus übergegangen. So kann beispielsweise festgestellt werden, dass das Druckverhalten im zweiten Druckreservoir einerseits ein bestimmtes soll Niveau erreicht hat und andererseits auch stabil ist. In diesem Fall kann dazu übergegangen werden, die Behältnisse nicht mehr nur vor-, sondern auch zwischenzublasen bzw. das zweite Druckreservoir auch aktiv in die Expansion der Behältnisse einzubinden.

Es wird damit eine (zeitlich) erste Phase vorgeschlagen (die jedoch dem oben genannten zweiten Betriebsmodus entspricht), in welcher die ersten Behältnisse ohne den Zwischenblasdruck geblasen werden. In dieser Phase schließt sich daher an den Vorblasdruck P1 direkt die Beaufschlagung mit dem Fertigblasdruck P2 an. Andererseits wird jedoch in dieser Phase bereits in das wenigstens eine Zwischenblasdruckniveau (Pi1) recycelt. Da in dieser Phase nur rückgespeist, nicht aber abgenommen wird, steigt der Druck in dem betreffenden Druckreservoir bzw. Ringkanal von Behältnis zu Behältnis an. Wird ein bestimmtes Niveau in den Druckniveaus überschritten wechselt die Maschine in "Phase 2"

In Phase erfolgt ein Druckaufbau mit inzwischen dem wenigstens einen Zwischenblasdruckniveau und bevorzugt mit zwei Zwischenblasdruckniveaus.

Sobald das Druckniveau in dem einen Druckreservoir und bevorzugt in zwei Zwischendruckreservoirs stabil ist, kann die Vorrichtung in den zweiten Betriebsmodus (den normalen Arbeitsbetrieb) übergehen.

Bei einem weiteren bevorzugten Verfahren werden die Kunststoffvorformlinge mit einem weiteren Druckniveau beaufschlagt, wobei dieses weitere Druckniveau höher ist als das zweite Druckniveau jedoch geringer als das dritte Druckniveau. Bei diesem Verfahren wird vorgeschlagen, dass die Kunststoffvorformlinge mit zwei Zwischenblasdruckniveaus beaufschlagt werden. Bevorzugt wird auch in das Druckreservoirs des weiteren Druckniveaus recycelte Druckluft geleitet.

Bevorzugt steht für dieses weitere Druckniveau ein weiteres Druckreservoir und insbesondere ein Ringkanal zur Verfügung. Bevorzugt wird auch dieses weitere Druckreservoir zu Beginn eines Umformungsvorgangs nicht befüllt und/oder dieses weitere Druckreservoir wird nicht mit Frischluft und/oder mit Luft von außen befüllt.

Bei einem weiteren bevorzugten Verfahren werden Arbeitsparameter für die Beaufschlagung mit dem ersten und/oder dritten Druckniveau vorgegeben, insbesondere durch einen Benutzer vorgegeben. So kann beispielsweise durch einen Benutzer vorgegeben werden, welche Druckhöhe das erste und das dritte Druckniveau haben sollen, wann entsprechende Ventile öffnen und schließen sollen, um die Kunststoffvorformlinge zu beaufschlagen.

Bei einem weiteren bevorzugten Verfahren werden Arbeitsparameter für die Beaufschlagung mit dem zweiten Druckniveau durch eine Steuerungseinrichtung ermittelt. Auf diese Weise ist es möglich, dass wiederum ein Druckbeginn oder ein Druckende oder eine Druckdauer vorgegeben werden. Besonders bevorzugt ermittelt daher die Steuerung beispielsweise ideale Druckhöhen und Druckzeiten für die Zwischenblasdruckstufen.

Besonders bevorzugt wird daher kein Solldruck mehr für die Zwischenblasdruckstufen PI1 und Pi2 vorgegeben. Stattdessen findet bevorzugt die Vorrichtung selbst ein Optimum für diese Drücke (und/oder Beaufschlagungszeiten).

Bevorzugt sind Rahmenbedingung hierfür konstante Luftabnahme und Luftrückgewinnungszeiten. Im ersten Entwicklungsschritt können diese bevorzugt als fest angenommen werden. In weiteren Ausführungsformen wären auch geregelte Druckanstiegs- und Recyclingzeiten denkbar.

Ein Vorteil dieser Ausführungsform besteht darin, dass Druckminderer und Prop-Ventile für die jeweiligen Druckreservoirs Pi1 und Pi2 entfallen.

Bei einer bevorzugten Ausführungsform kann jedoch ein einzelnes Ventil zu Service- oder Diagnosezwecken zur Verfügung stehen oder zum Vorbefüllen des Kanals.

Im Folgenden wird ein in mehrere Phasen unterteilter Startbetrieb für eine derartige Vorrichtung beschrieben:
In einer ersten Phase (Phase 1) werden die ersten Flaschen werden ohne Pi d.h. ohne die Zwischenblasdrücke geblasen. Es schließt sich nach P1 also unmittelbar P2 an. Auf der Rückgewinnungsseite wird jedoch Pi2 und Pi1 recycelt. Da nur rückgespeist, nicht aber abgenommen wird, steigt der Druck im Ringkanal von Flasche zu Flasche an. Wird ein bestimmtes Niveau in den Ringkanälen überschritten wechselt die Maschine in die zweite Phase, d.h. in "Phase 2"

Die zweite Phase ("Phase 2") wird eingeleitet, wenn bestimmte Startbedingungen erfüllt werden, beispielsweise der Zwischenblasdruck Pi1 größer ist als 1/3 des Fertigblasdrucks P2 und der Zwischenblasdruck Pi2 größer ist als 2/3 des Fertigblasdrucks P2.

Sobald die Ringkanaldrücke die Startbedingung erreichen bzw. überschreiten wechselt die Steuerung in Phase 2. Hier wird nun erstmals neben P1 und P2 auch Pi1 und Pi2 beim Druckaufbau geschalten. Auf der Rückgewinnungsseite schalten nach wie vor Pi2 und Pi1. Durch die festen Druckaufbau- und Recyclingzeiten pendelt sich ein gewisser Pi1- und Pi2-Druck ein. Diese zweite Phase ist bevorzugt eine Übergangsphase zwischen dem oben beschriebenen zweiten Betriebsmodus und dem ersten Betriebsmodus.

Bevorzugt wird daher die Vorrichtung in wenigstens drei unterschiedlichen Betriebsmodi betrieben, wobei der dritte Betriebsmodus bevorzugt ein Übergangsmodus zwischen dem zweiten Betriebsmodus und dem ersten Betriebsmodus ist und/oder der dritte Betriebsmodus zeitlich zwischen dem zweiten Betriebsmodus und dem ersten Betriebsmodus liegt.

An die zweite Phase schließt sich bevorzugt eine dritte Phase ("Phase 3") an.

Auch für diese dritte Phase wird bevorzugt eine Startbedingung definiert, diese kann beispielsweise darin bestehen, dass die Zwischenblasdrücke Pi1 und Pi2 stabil sind und der Zwischenblasdruck Pi1 größer ist als der Vorblasdruck P1. Daneben können hier auch noch die obigen Bedingungen für den Start von Phase 2 gelten.

Die Maschine geht in Phase 3 über, wenn sich die Ringkanaldrücke für Pi1 und Pi2 stabilisiert haben. Grundvoraussetzung ist jedoch, dass Pi1 noch über P1 liegt. Sind alle Bedingungen erfüllt kommt mit Phase 3 nun auch das P1 Recycling zum Zug. Die P1 Recycling Regelung agiert dabei wie an sich im Stand der Technik bekannt. Mit Phase 3 befindet sich die Maschine im Vollbetrieb und/oder dem oben genannten ersten Betriebsmodus.

Bevorzugt vollzieht sich der gesamte Ablauf von Phase 1-3 im Allgemeinen in nur wenigen Sekunden. Der stabile eingeschwungene Zustand wird somit relativ schnell erreicht.

Wird eine Startbedingung nicht mehr erfüllt wechselt das System bevorzugt automatisch zurück in die vorherige Phase. Dieses Umschalten kann jederzeit in Echtzeit erfolgen und stellt bevorzugt eine Antwortreaktion auf eine bestimmte Maschinensituation dar. Mit dieser Methode gelingt es Störeinflüsse, wie z.B. Leckagen, Flaschenplatzer, Ausleitung von Vorblasflaschen, oder abgeschaltene Stationen, abzufangen.

Durch die Erfindung ist es nun auch möglich Pi Drücke d.h. Zwischenblasdrücke anzuwenden, die niedriger sind als P1. Der Entlastungsdruck ist damit losgelöst vom P1 Druck, wenngleich es natürlich für den Luftverbrauch immer noch vorteilhaft ist P1 vollständig über Recycling zu speisen.

Daneben bietet das erfindungsgemäße Verfahren eine wirksame Methode, um Störeinflüsse zu bewältigen.

Weiterhin können perfekte Ringkanaldrücke (insbesondere für das Zwischenblasen) für jeden Blasprozess, insbesondere für Blasprozesse mit zwei oder mehr Zwischenblasstufen zur Verfügung gestellt werden.

Die vorliegende Erfindung ist weiterhin auf eine Vorrichtung zum Umformen von Kunststoffvorformlingen zur Kunststoffbehältnissen gerichtet mit einer Transporteinrichtung, welche die Kunststoffvorformlinge entlang eines vorgegebenen Transportpfads P transportiert, wobei die Transporteinrichtung einen drehbaren Transportträger aufweist, an dem eine Vielzahl von Umformungsstationen zum Umformen der Kunststoffvorformlinge zu den Kunststoffbehältnissen angeordnet ist. Dabei weisen die Umformungsstationen jeweils Beaufschlagungseinrichtungen (insbesondere Blasdüsen) auf, welche die Kunststoffvorformlinge mit dem fließfähigen Medium beaufschlagen und die Vorrichtung weist wenigstens drei Reservoirs bzw. Druckreservoirs auf, welche das fließfähige und insbesondere gasförmige Medium speichern.

Weiterhin sind die Kunststoffvorformlinge in einem ersten Betriebsmodus zu ihrer Expansion mit einem ersten in dem ersten Druckreservoir gespeicherten Druckniveau, wenigstens einem zweiten in dem zweiten Druckreservoir gespeicherten Druckniveau und einem Dritten in dem dritten Druckreservoir gespeicherten Druckniveau beaufschlagbar, wobei das zweite Druckniveau höher ist als das erste Druckniveau und das dritte Druckniveau höher ist als das zweite Druckniveau.

Erfindungsgemäß ist die Vorrichtung zeitweise in einem zweiten Betriebsmodus betreibbar, wobei sich dieser zweite Betriebsmodus durch einen im zweiten Druckreservoir herrschendes Druckniveau von dem ersten Betriebsmodus unterscheidet. Bei einer weiteren erfindungsgemäßen Ausgestaltung weist die Vorrichtung eine Frischluftversorgungseinrichtung auf, welche derart ausgebildet ist, dass sie das erste und dritte Druckreservoir, nicht jedoch das zweite Druckreservoir mit Frischluft beaufschlagt.

Besonders bevorzugt weist die Frischluftversorgungseinrichtung einen Kompressor oder einen Druckanschluss auf. Weiterhin weist die Vorrichtung bevorzugt eine Verteilereinrichtung auf, welche die Druckluft ausgehend von der Frischluftversorgungseinrichtung auf den drehbaren Träger und insbesondere zu den Druckreservoirs leitet. Bevorzugt ist die Verteileinrichtung als Drehverteiler ausgebildet.

Bei einer weiteren bevorzugten Ausführungsform sind die Druckreservoirs Ringkanäle. Besonders bevorzugt sind diese Druckreservoirs an dem drehbaren Träger angeordnet.

Bei einer weiteren vorteilhaften Ausführungsform weist die Vorrichtung eine Vielzahl von Sensor- und/oder Messeinrichtungen auf, um Betriebsparameter zu bestimmen. Besonders bevorzugt ist jedem Druckreservoir wenigstens eine Druckmesseinrichtung zugeordnet. Besonders bevorzugt sind auch eine oder mehrere Durchflussmesseinrichtungen vorgesehen, welche eine Durchflussmenge von Luft bestimmen, die von einem Druckreservoir zu den jeweiligen Umformungsstationen gelangt.

Bei einer weiteren vorteilhaften Ausführungsform weist die Vorrichtung eine Regeleinrichtung auf, um einen Druck in den Druckreservoirs festzulegen. Dies ist insbesondere für das erste und dritte Druckreservoir gegeben. Besonders bevorzugt handelt es sich bei der Regeleinrichtung um einen Domdruckregler.

Bei einer weiteren vorteilhaften Ausführungsform weist die Vorrichtung ein weiteres Druckreservoir auf, welches dazu geeignet und bestimmt ist, die Kunststoffvorformlinge mit einem weiteren Druckniveau zu beaufschlagen. Insbesondere handelt es sich hierbei um ein weiteres Zwischenblasdruckniveau. Besonders bevorzugt wird auch dieses weitere Druckreservoir nicht mit Frischluft versorgt.

Besonders bevorzugt ist Druckluft von den Kunststoffbehältnissen in wenigstens ein Druckreservoir führbar bzw. rückführbar. Besonders bevorzugt handelt es sich dabei wenigstens um das zweite Druckreservoir für einen Zwischenblasdruck und/oder das weitere Druckreservoir für den weiteren Zwischenblasdruck und/oder das Druckreservoir für den oben genannten ersten Druck.

Weitere Vorteile ergeben sich aus den beigefügten Zeichnungen. Darin zeigen:
- Fig. 1: eine schematische Darstellung einer erfindungsgemäßen Vorrichtung;
- Fig. 2: eine Darstellung von Druckverläufen in den unterschiedlichen Phasen; und
- Fig. 3: eine Darstellung zur Veranschaulichung des Übergangs zwischen den Phasen.

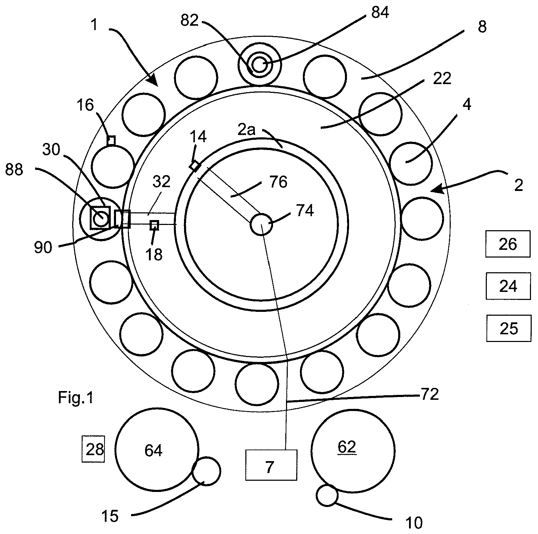

Fig. 1 zeigt eine Vorrichtung 1 zum Umformen von Kunststoffvorformlingen 10 zu Kunststoffbehältnissen 15. Diese Vorrichtung weist einen drehbaren Träger 22 auf, an dem eine Vielzahl von Umformungsstationen 4 angeordnet ist. Diese einzelnen Umformungsstationen weisen jeweils Blasformeinrichtungen 82 auf, die in ihrem Inneren einen Hohlraum zum Expandieren der Kunststoffvorformlinge ausbilden.

Das Bezugszeichen 84 kennzeichnet eine Beaufschlagungseinrichtung, welche zum Expandieren der Kunststoffvorformlinge 10 dient. Hierbei kann es sich beispielsweise um eine Blasdüse handeln, welche an eine Mündung der Kunststoffvorformlinge anlegbar ist, um diese so zu expandieren. Daneben wäre es auch denkbar, dass die Blasdüse an der Blasformeinrichtung abdichtet. Bevorzugt ist diese Beaufschlagungseinrichtung in einer Längsrichtung und bevorzugt ausschließlich in einer Längsrichtung der Kunststoffvorformlinge bewegbar.

Das Bezugszeichen 90 kennzeichnet eine Ventilanordnung wie einen Ventilblock, der bevorzugt eine Vielzahl von Ventilen aufweist, welche die Beaufschlagung der Kunststoffvorformlinge mit unterschiedlichen Druckniveaus steuern. Bevorzugt weist jede Umformungsstation einen derartigen Ventilblock auf.

Bei einem bevorzugten Verfahren werden die Kunststoffvorformlinge zunächst mit einem Vorblasdruck P1 beaufschlagt, anschließend mit mindestens einem Zwischenblasdruck Pi, der höher ist als der Vorblasdruck und schließlich mit einem Fertigblasdruck P2, der höher ist als der Zwischenblasdruck Pi1. Besonders bevorzugt werden die Kunststoffvorformlinge mit einem weiteren Zwischenblasdruck Pi2 beaufschlagt, der größer ist als der Druck Pi1 jedoch kleiner als der Druck P2.

Nach der Expansion der Kunststoffbehältnisse werden bevorzugt die Drücke bzw. die Druckluft wieder von dem Behältnis in die einzelnen Druckreservoirs zurückgeführt.

Das Bezugszeichen 88 kennzeichnet eine Reckstange, die dazu dient, die Kunststoffvorformlinge in ihrer Längsrichtung zu dehnen. Bevorzugt weisen sämtliche Umformungsstationen derartige Blasformen 82 sowie Reckstangen 88 auf. Diese Reckstange ist bevorzugt Bestandteil einer mit 30 bezeichneten Reckeinrichtung. Die Reckstange ist (bevorzugt ebenfalls ausschließlich) in der Längsrichtung der Kunststoffvorformlinge 10 beweglich.

Bevorzugt liegt die Anzahl dieser Umformungsstationen 4 zwischen 2 und 100, bevorzugt zwischen 4 und 60, bevorzugt zwischen 6 und 40.

Die Kunststoffvorformlinge 10 werden über eine erste Transporteinrichtung 62 wie insbesondere aber nicht ausschließlich einen Transportstern der Vorrichtung zugeführt. Über eine zweite Transporteinrichtung 64 werden die Kunststoffbehältnisse 15 abtransportiert.

Das Bezugszeichen 7 kennzeichnet eine Druckbereitstellungseinrichtung wie etwa einen Kompressor oder auch einen Druckluftanschluss. Die Druckluft wird über eine Verbindungsleitung 72 zu einem Drehverteiler 74 gefördert und von diesem über eine weitere Leitung 76 an das Druckluftreservoir 2a angegeben, bei dem es sich hier um einen Ringkanal handelt. Damit dient bevorzugt dieser Drehverteiler zu dem Zweck, Luft von einem stationären Teil der Vorrichtung in einen sich drehenden Teil der Vorrichtung zu führen.

Neben diesem dargestellten Ringkanal 2a sind bevorzugt noch weitere Ringkanäle vorgesehen, die in der in Fig. 1 gezeigten Darstellung jedoch durch den Ringkanal 2a verdeckt sind, beispielsweise darunterliegen. So ist bevorzugt je ein Druckreservoir zur Speicherung des Drucks P2 sowie der Zwischenblasdrücke Pi1 und Pi2 und des Drucks P1 vorhanden.

Das Bezugszeichen 32 kennzeichnet eine Verbindungsleitung, welche die Druckluft an eine Umformungsstation 4 bzw. deren Ventilblock 90 abgibt. Bevorzugt ist jeder der Ringkanäle über entsprechende Verbindungsleitungen mit sämtlichen Umformungsstationen verbunden. Diese Verbindungsleitung ist bevorzugt in dem drehenden Teil der Vorrichtung angeordnet.

Das Bezugszeichen 8 kennzeichnet schematisch einen optionalen Reinraum, der hier bevorzugt ringförmig ausgebildet ist und den Transportpfad der Kunststoffvorformlinge 10 umgibt. Bevorzugt ist eine (geometrische) Drehachse bezüglich derer der Transportträger 22 drehbar ist, außerhalb des Reinraums 8 angeordnet. Bevorzugt ist der Reinraum mit einer Dichtungseinrichtung, welche bevorzugt wenigstens zwei Wasserschlösser aufweist, gegenüber der unsterilen Umgebung abgedichtet.

Weiterhin weist die Vorrichtung eine (in Fig. 1 nicht gezeigte) Deckeleinrichtung auf, welche den Reinraum 8 nach oben hin begrenzt. Diese Deckeleinrichtung ist dabei bevorzugt an wenigstens einer der Reckeinrichtungen 30 angeordnet.

Die Vorrichtung weist eine Vielzahl von Mess- und/oder Sensoreinrichtungen auf, welche zur Steuerung der Vorrichtung dienen. Das Bezugszeichen 14 kennzeichnet eine Druckmesseinrichtung, welche einen Luftdruck innerhalb des Druckluftreservoirs 2a misst. Bevorzugt weisen auch die übrigen Druckluftreservoirs entsprechende Druckmesseinrichtungen auf.

Das Bezugszeichen 16 kennzeichnet eine weitere Druckmesseinrichtung, welche einen Luftdruck insbesondere einen Behältnisinnendruck des zu expandierenden Kunststoffvorformlings misst. Bevorzugt ist jeder Umformungsstation eine solche Druckmesseinrichtung zugeordnet.

Das Bezugszeichen 18 kennzeichnet ebenfalls schematisch eine Durchflussmesseinrichtung, welche einen Durchfluss der Blasluft von einem Druckluftreservoir zu dem Ventilblock 90 einer Umformungsstation 4 bestimmt. Bevorzugt sind entsprechende Durchflussmesseinrichtungen jeweils zwischen einem Druckluftreservoir und allen Umformungsstationen angeordnet.

Auch zwischen den weiteren Druckluftreservoirs und den jeweiligen Umformungsstationen können weitere Durchflussmesseinrichtungen zugeordnet sein.

Weiterhin sind bevorzugt auch Positionserfassungseinrichtungen vorgesehen, welche Positionen der Reckstangen der einzelnen Umformungsstationen erfassen können.

Das Bezugszeichen 24 kennzeichnet eine Steuerungseinrichtung, welche die Vorrichtung 1 steuert und insbesondere regelt. Diese Steuerungseinrichtung ist dabei bevorzugt auch in der Lage, Arbeitsparameter der Vorrichtung zu ändern.

So steuert die Steuerungseinrichtung insbesondere die einzelnen Ventile und damit die Beaufschlagung der Kunststoffvorformlinge mit den einzelnen Druckniveaus. Daneben steuert die Steuerungseinrichtung bevorzugt auch eine Bewegung der Reckstangen der einzelnen Umformungsstationen. Bevorzugt steuert die Steuerungseinrichtung auch Bewegungen der Beaufschlagungseinrichtungen, d.h. der Blasdüsen. Die Steuerungseinrichtung ist daher bevorzugt dazu geeignet, die Zeitpunkte, zu denen die Beaufschlagungseinrichtungen an die Kunststoffvorformlinge angelegt werden und/oder die Zeitpunkte, zu denen die Blasformeinrichtungen wieder von den Kunststoffvorformlingen abgehoben werden zu steuert und insbesondere auch, diese Zeitpunkte zu verändern.

Das Bezugszeichen 26 kennzeichnet eine Speichereinrichtung, in der insbesondere Messgrößen erfasst werden, insbesondere Druckwerte und Durchflusswerte, aber auch entsprechende Arbeitsparameter. Bevorzugt werden diese jeweiligen Werte mit einer zeitlichen Zuordnung gespeichert.

Bevorzugt können diese Werte kontinuierlich und insbesondere über lange Zeiträume eines Maschinenbetriebs gespeichert. Die Steuerungseinrichtung steuert bzw. regelt auch unter Berücksichtigung dieser aufgenommenen Messwerte die Vorrichtung.

Das Bezugszeichen 28 kennzeichnet grob schematisch eine Inspektionseinrichtung zum Inspizieren der gefertigten Behältnisse.

Das Bezugszeichen 25 kennzeichnet eine Anzeigeeinrichtung, welche zur Ausgabe von Informationen an einen Maschinenbediener dient. Mittels dieser Anzeigeeinrichtung können etwa gemessene Druck(verlaufs)kurven ausgegeben werden.

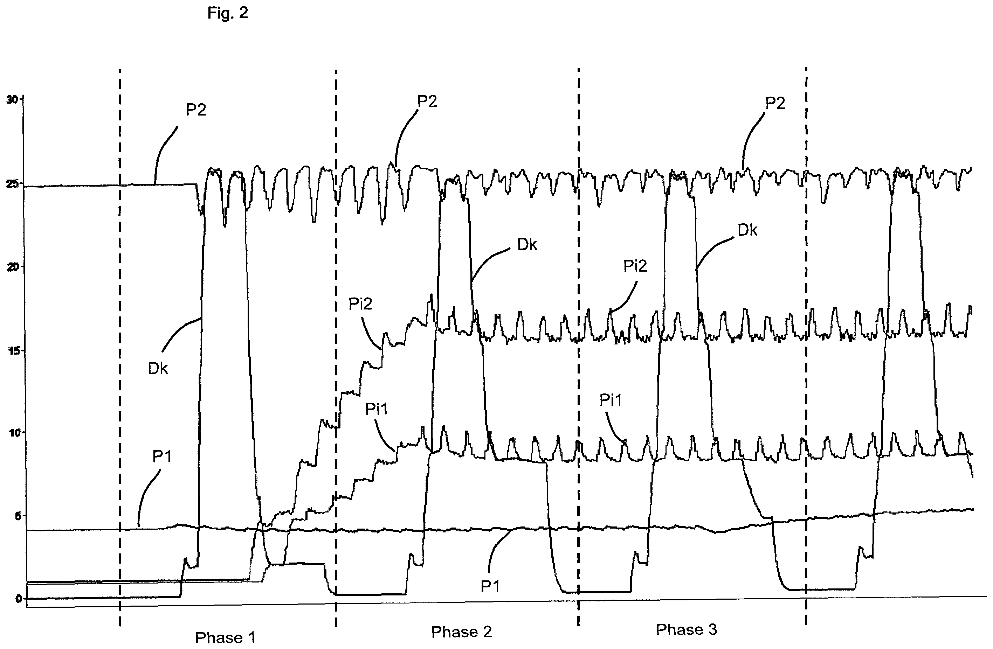

Fig. 2 zeigt eine Darstellung von Druckverläufe. Dabei bezeichnet das Bezugszeichen P2 den Druck P2 bzw. dessen zeitlichen Verlauf in den einzelnen Phasen 1, 2, 3. Man erkennt, dass bereits zu Arbeitsbeginn das P2 Druckreservoir mit dem Druck P2 befüllt wird. Während der Produktion schwankt dieser Druck P2 während der Fertigblasphase, weil in den einzelnen Umformungsstationen jeweils die Kunststoffvorformlinge beaufschlagt werden aber weiterhin von außen Druckluft zugeführt wird.

Das Bezugszeichen P1 kennzeichnet den Vorblasdruck, der auch bereits zu Beginn der Produktion an dem entsprechenden Druckreservoir anliegt.

Die beiden Zwischenblasdrücke Pi1 und Pi2 sind am Anfang der Produktion noch auf dem Niveau des Außendrucks. Man erkennt, dass diese beiden Drücke sich in der Phase 1 langsam aufbauen.

In der Phase 2 bauen sich die Zwischenblasdrücke weiter auf und stehen dann in Phase 3 im Wesentlichen konstant zur Verfügung.

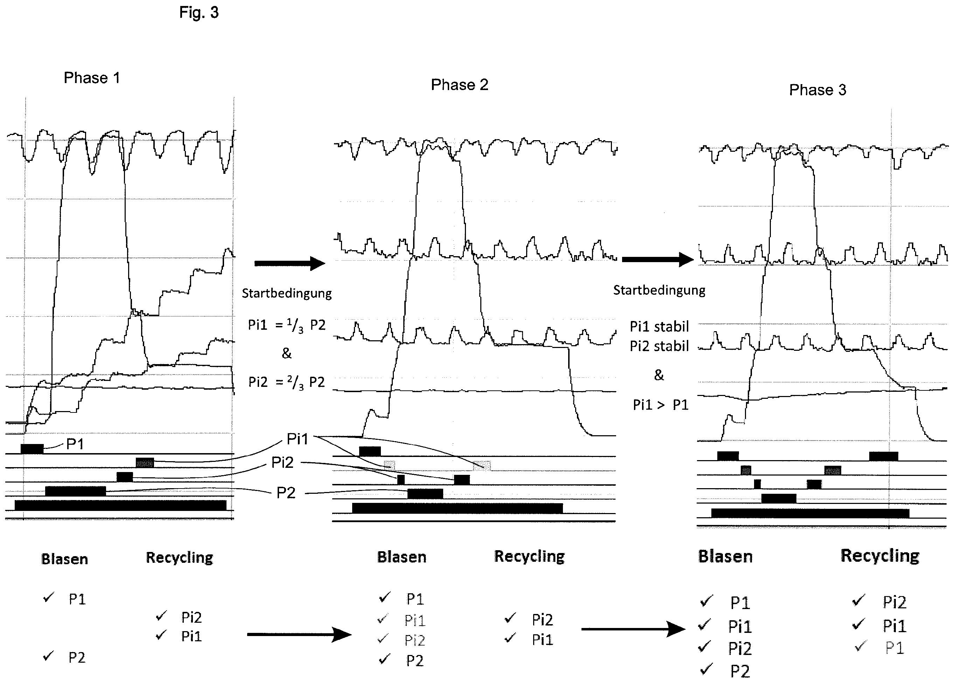

Fig. 3 zeigt die Phasen aus Fig. 2, hier jedoch jeweils durch die jeweiligen Startbedingungen unterbrochen. Man erkennt, dass bei Vorliegen der Startbedingung Pi1 = 1/3 P2 und Pi2 = 2/3 P2 von der ersten Phase in die zweite Phase übergegangen wird.

In der ersten Phase werden die Behältnisse nur mit dem ersten Druck P1 und dem dritten Druck P2 beaufschlagt, es findet also kein Zwischenblasen statt. Allerdings werden bei der Druckluftrückführung auch die Druckreservoirs für die Zwischenblasdrücke befüllt und so baut sich in diesen Druckreservoirs langsam ein Druck auf.

In der Phase 2 werden auch in der Blasphase die beiden Zwischendruckniveaus verwendet.

Ein Recycling findet hier in die Zwischenblasdruckniveaus Pi1 und Pi2 statt.

Bei Erreichen weiterer Startbedingungen (Pi1 stabil und Pi2 stabil sowie Pi1 größer P1) wird die Phase 3 ausgelöst. In Phase 3, welche bevorzugt den oben erwähnten ersten Betriebsmodus bzw. den normalen Arbeitsbetrieb darstellt, erfolgt nun auch eine Rückführung von Druckluft in das P1 Druckluftreservoir.

Bevorzugt wird auch auf unterschiedliche Störeinflüsse reagiert. Dabei wird bevorzugt je nach Druckreservoir in unterschiedlicher Weise reagiert.

Hinsichtlich des P2 Druckreservoirs wird ein Ausgleich über eine Regeleinrichtung, insbesondere einen Domdruckregler vorgenommen.

Hinsichtlich der Zwischenblasdrücke Pi1 und Pi2 wird bevorzugt ein Wechsel zwischen den einzelnen Phasen 1 - 3 je nach Vorliegen oder Nicht - Vorliegen der Startbedingungen vorgenommen.

Hinsichtlich des Druckreservoirs P1 kann, insbesondere je nach Zustand der Druckniveaus Pi1 und Pi2 eine Speisung dieses Reservoirs über Recyclingluft oder Frischluft vorgenommen werden. Je nach Art der Speisung kann auch ein Offset der Ventilschaltungen vorgenommen werden und/oder in eine synchrone Speisung bzw. Druckentnahme übergegangen werden.

## Patentansprüche

1. Verfahren zum Umformen von Kunststoffvorformlingen (10) zu Kunststoffbehältnissen (15) wobei eine Transporteinrichtung (2) die Kunststoffvorformlinge (10) entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen (15) angeordnet ist, wobei die Umformungsstationen jeweils Beaufschlagungseinrichtungen (84) aufweisen, welche die Kunststoffvorformlinge mit dem fließfähigen Medium beaufschlagen und wobei die Vorrichtung (1) wenigstens drei Druckreservoirs aufweist, welche das fließfähige und insbesondere gasförmige Medium speichern und die Kunststoffvorformlinge in einem ersten Betriebsmodus zu ihrer Expansion mit einem ersten in dem ersten Druckreservoir (2a) gespeicherten Druckniveau (P1), wenigstens einem zweiten in dem zweiten Druckreservoir gespeicherten Druckniveau (Pi1) und einem dritten in dem dritten Druckreservoir gespeicherten Druckniveau (P2) beaufschlagt werden, wobei das zweite Druckniveau (Pi1) höher ist als das erste Druckniveau (P1) und das dritte Druckniveau (P2) höher ist als das zweite Druckniveau (Pi1)
**dadurch gekennzeichnet, dass**
die Vorrichtung (1) zeitweise in einem zweiten Betriebsmodus betrieben wird, wobei sich dieser zweite Betriebsmodus durch ein in dem zweiten Druckreservoir herrschendes Druckniveau von dem ersten Betriebsmodus unterscheidet und, dass der zweite Betriebsmodus (B1) ein Startbetrieb der Vorrichtung ist und zu einem Beginn dieses Startbetriebs nur das erste Druckreservoir und das dritte Druckreservoir mit Druckluft gefüllt werden und lediglich das erste Druckreservoir und das dritte Druckreservoir mit Frischluft befüllt werden.

2. Verfahren nach Anspruch 1,
**dadurch gekennzeichnet, dass**
in dem zweiten Betriebsmodus wenigstens zeitweise die Kunststoffvorformlinge nur mit dem ersten Druckniveau (P1) und dem zweiten Druckniveau (P2) beaufschlagt werden.

3. Verfahren nach wenigstens einem der vorangegangenen Ansprüche,
**dadurch gekennzeichnet, dass**
in wenigstens einem Betriebsmodus und bevorzugt in beiden Betriebsmodi wenigstens zeitweise Druckluft von den Umformungsstationen und/oder den Kunststoffbehältnissen zurück in das zweite Druckreservoir geleitet wird.

4. Verfahren nach wenigstens einem der vorangegangenen Ansprüche,
**dadurch gekennzeichnet, dass**
ein Druckniveau in dem zweiten Druckreservoir bestimmt wird und in Abhängigkeit von diesem Druckniveau von einem Betriebsmodus in den anderen Betriebsmodus übergegangen wird.

5. Verfahren nach wenigstens einem der vorangegangenen Ansprüche,
**dadurch gekennzeichnet, dass**
die Kunststoffvorformlinge mit einem weiteren Druckniveau (Pi2) beaufschlagt werden, wobei dieses weitere Druckniveau höher ist als das zweite Druckniveau (Pi1) jedoch geringer als das dritte Druckniveau (P2).

6. Verfahren nach wenigstens einem der vorangegangenen Ansprüche,
**dadurch gekennzeichnet, dass**
Arbeitsparameter für die Beaufschlagung mit dem ersten und/oder dritten Druckniveau vorgegeben werden und/oder Arbeitsparameter für die Beaufschlagung mit dem zweiten Druckniveau durch eine Steuerungseinrichtung ermittelt werden.

7. Vorrichtung zum Umformen von Kunststoffvorformlingen (10) zu Kunststoffbehältnissen (15) mit einer Transporteinrichtung (2), welche die Kunststoffvorformlinge (10) entlang eines vorgegebenen Transportpfads (P) transportiert, wobei die Transporteinrichtung einen drehbaren Transportträger (22) aufweist, an dem eine Vielzahl von Umformungsstationen zum Umformen der Kunststoffvorformlinge (10) zu den Kunststoffbehältnissen (15) angeordnet ist, wobei die Umformungsstationen jeweils Beaufschlagungseinrichtungen (84) aufweisen, welche die Kunststoffvorformlinge mit dem fließfähigen Medium beaufschlagen und wobei die Vorrichtung (1) wenigstens drei Druckreservoirs aufweist, welche das fließfähige und insbesondere gasförmige Medium speichern und die Kunststoffvorformlinge in einem ersten Betriebsmodus zur ihrer Expansion mit einem ersten in dem ersten Druckreservoir (2a) gespeicherten Druckniveau (P1), wenigstens einem zweiten in dem zweiten Druckreservoir gespeicherten Druckniveau (Pi1) und einem dritten in dem dritten Druckreservoir gespeicherten Druckniveau (P2) beaufschlagbar sind, wobei das zweite Druckniveau (Pi1) höher ist als das erste Druckniveau (P1) und das dritte Druckniveau (P2) höher ist als das zweite Druckniveau (Pi1)
**dadurch gekennzeichnet, dass**
die Vorrichtung (1) zeitweise in einem zweiten Betriebsmodus betreibbar ist, wobei sich dieser zweite Betriebsmodus durch ein in dem zweiten Druckreservoir herrschendes Druckniveau von dem ersten Betriebsmodus unterscheidet und die Vorrichtung eine Frischluftversorgungseinrichtung aufweist, welche derart ausgebildet ist, dass sie das erste und das dritte Druckreservoir, nicht jedoch das zweite Druckreservoir mit Frischluft beaufschlagt.

8. Vorrichtung (1) nach dem vorangegangenen Anspruch,
die Vorrichtung (1) ein weiteres Druckreservoir aufweist, welches dazu geeignet und bestimmt ist, die Kunststoffvorformlinge mit einem weiteren Druckniveau zu beaufschlagen.

9. Vorrichtung (1) nach wenigstens einem der vorangegangenen Ansprüche 7-8,
**dadurch gekennzeichnet, dass**
Druckluft von den Kunststoffbehältnissen in wenigstens ein Druckreservoir führbar ist.

## Claims

1. A method for forming plastic preforms (10) into plastic containers (15), wherein a transport device (2) transports the plastic preforms (10) along a predetermined transport path (P), wherein the transport apparatus has a rotatable transport carrier (22) on which a plurality of forming stations for forming the plastic preforms (10) into the plastic containers (15) are arranged, wherein the forming stations each have application devices (84) which apply the plastic preforms with the flowable medium, and wherein the apparatus (1) has at least three pressure reservoirs which store the flowable and in particular gaseous medium, and, to expand them, the plastic preforms are applied in a first operating mode with a first pressure level (P1) stored in the first pressure reservoir (2a), with at least one second pressure level (Pi1) stored in the second pressure reservoir, and with a third pressure level (P2) stored in the third pressure reservoir, wherein the second pressure level (Pi1) is higher than the first pressure level (P1), and the third pressure level (P2) is higher than the second pressure level (Pi1),
**characterized in that**
the apparatus is operated temporarily in a second operating mode, wherein this second operating mode differs from the first operating mode by a pressure level prevailing in the second pressure reservoir and that the second operating mode (B1) is a starting mode of the apparatus, and, at a beginning of this starting mode, only the first pressure reservoir and the third pressure reservoir are filled with compressed air, and only the first pressure reservoir and the third pressure reservoir are filled with fresh air.

2. The method according to claim 1,
**characterized in that**,
in the second operating mode, the plastic preforms are at least temporarily applied only with the first pressure level (P1) and the second pressure level (P2).

3. The method according to at least one of the preceding claims, **characterized in that**,
in at least one operating mode and preferably in both operation modes, compressed air is at least temporarily guided from the forming stations and/or the plastic containers back into the second pressure reservoir.

4. The method according to at least one of the preceding claims, **characterized in that**
a pressure level in the second pressure reservoir is determined, and, depending upon this pressure level, there is a transition from one operating mode to the other operating mode.

5. The method according to at least one of the preceding claims, **characterized in that**
the plastic preforms are applied with a further pressure level (Pi2), wherein this further pressure level is higher than the second pressure level (Pi1), but lower than the third pressure level (P2).

6. The method according to at least one of the preceding claims, **characterized in that**
working parameters for application with the first and/or third pressure levels are specified, and/or working parameters for application of the second pressure level are determined by a control device.

7. An apparatus for forming plastic preforms (10) into plastic containers (15) with a transport device (2) that transports the plastic preforms (10) along a predetermined transport path (P), wherein the transport device has a rotatable transport carrier (22) on which a plurality of forming stations for forming the plastic preforms (10) into the plastic containers (15) are arranged, wherein the forming stations each have application devices (84) which apply the plastic preforms with the flowable medium, and wherein the apparatus (1) has at least three pressure reservoirs which store the flowable and in particular gaseous medium, and, to expand them, the plastic preforms can be applied in a first operating mode with a first pressure level (P1) stored in the first pressure reservoir (2a), with at least one second pressure level (Pi1) stored in the second pressure reservoir, and with a third pressure level (P2) stored in the third pressure reservoir, wherein the second pressure level (Pi1) is higher than the first pressure level (P1), and the third pressure level (P2) is higher than the second pressure level (Pi1),
**characterized in that**
the apparatus (1) can be operated temporarily in a second operating mode, wherein this second operating mode differs from the first operating mode by a pressure level prevailing in the second pressure reservoir, and the apparatus has a fresh air supply device which is designed such that it applies the first and the third pressure reservoirs, but not the second pressure reservoir, with fresh air.

8. The apparatus (1) according to the preceding claim,
the apparatus (1) has a further pressure reservoir which is suitable and intended for applying a further pressure level to the plastic preforms.

9. The apparatus (1) according to at least one of the preceding claims 7-8, **characterized in that**
compressed air from the plastic containers can be guided into at least one pressure reservoir.

## Revendications

1. Procédé de mise en forme de préformes en matière plastique (10) en des récipients en matière plastique (15), dans lequel un système de transport (2) transporte les préformes en matière plastique (10) le long d'un trajet de transport (P) prédéfini, dans lequel le système de transport présente un support de transport rotatif (22) sur lequel est disposée une pluralité de stations de mise en forme pour la mise en forme des préformes en matière plastique (10) en les récipients en matière plastique (15), dans lequel les stations de mise en forme présentent respectivement des systèmes d'application (84) qui appliquent un milieu fluide sur les préformes en matière plastique et dans lequel le dispositif (1) présente au moins trois réservoirs sous pression, qui stockent le milieu fluide et notamment gazeux, et les préformes en matière plastique sont soumises dans un premier mode de fonctionnement pour leur expansion à un premier niveau de pression (P1) stocké dans le premier réservoir de pression (2a), au moins à un deuxième niveau de pression (Pi1) stocké dans le deuxième réservoir de pression et à un troisième niveau de pression (P2) stocké dans le troisième réservoir de pression, dans lequel le deuxième niveau de pression (Pi1) est supérieur au premier niveau de pression (P1) et le troisième niveau de pression (P2) est supérieur au deuxième niveau de pression (Pi1),
**caractérisé en ce que**
le dispositif (1) fonctionne temporairement dans un deuxième mode de fonctionnement, dans lequel ledit deuxième mode de fonctionnement se distingue du premier mode de fonctionnement par un niveau de pression régnant dans le deuxième réservoir de pression et que le deuxième mode de fonctionnement (B1) est un mode de démarrage du dispositif et, au début dudit mode de démarrage, seuls le premier réservoir de pression et le troisième réservoir de pression sont remplis d'air comprimé et seuls le premier réservoir de pression et le troisième réservoir de pression sont remplis d'air frais.

2. Procédé selon la revendication 1,
**caractérisé en ce que**
dans le deuxième mode de fonctionnement, les préformes en matière plastique ne sont soumises au moins temporairement qu'au premier niveau de pression (P1) et au deuxième niveau de pression (P2).

3. Procédé selon au moins l'une quelconque des revendications précédentes,
**caractérisé en ce que**
dans au moins un mode de fonctionnement et de manière préférée dans les deux modes de fonctionnement, de l'air comprimé est réacheminé au moins temporairement depuis les stations de mise en forme et/ou les récipients en matière plastique dans le deuxième réservoir de pression.

4. Procédé selon au moins l'une quelconque des revendications précédentes,
**caractérisé en ce que**
un niveau de pression est défini dans le deuxième réservoir de pression et, en fonction dudit niveau de pression, on passe d'un mode de fonctionnement à l'autre mode de fonctionnement.

5. Procédé selon au moins l'une quelconque des revendications précédentes,
**caractérisé en ce que**
les préformes en matière plastique sont soumises à un autre niveau de pression (Pi2), dans lequel ledit autre niveau de pression est supérieur au deuxième niveau de pression (Pi1) mais est inférieur au troisième niveau de pression (P2).

6. Procédé selon au moins l'une quelconque des revendications précédentes,
**caractérisé en ce que**
des paramètres de travail pour l'application du premier et/ou du troisième niveau de pression sont spécifiés et/ou des paramètres de travail pour l'application du deuxième niveau de pression peuvent être déterminés par un système de commande.

7. Dispositif de mise en forme de préformes en matière plastique (10) en des récipients en matière plastique (15) avec un système de transport (2), qui transporte les préformes en matière plastique (10) le long d'un trajet de transport prédéfini (P), dans lequel le système de transport présente un support de transport rotatif (22), sur lequel est disposée une pluralité de stations de mise en forme pour la mise en forme des préformes en matière plastique (10) en les récipients en matière plastique (15), dans lequel les stations de mise en forme présentent respectivement des systèmes d'application (84), qui appliquent sur les préformes en matière plastique le milieu fluide et dans lequel le dispositif (1) présente au moins trois réservoirs de pression, qui stockent le milieu fluide et en particulier gazeux et les préformes en matière plastique peuvent être soumises dans un premier mode de fonctionnement pour leur expansion à un premier niveau de pression (P1) stocké dans le premier réservoir de pression (2a), au moins à un deuxième niveau de pression (Pi1) stocké dans le deuxième réservoir de pression et à un troisième niveau de pression (P2) stocké dans le troisième réservoir de pression, dans lequel le deuxième niveau de pression (Pi1) est supérieur au premier niveau de pression (P1) et le troisième niveau de pression (P2) est supérieur au deuxième niveau de pression (Pi1),
**caractérisé en ce que**
le dispositif (1) peut fonctionner temporairement dans un deuxième mode de fonctionnement, dans lequel ledit deuxième mode de fonctionnement se distingue du premier mode de fonctionnement par un niveau de pression régnant dans le deuxième réservoir de pression et le dispositif présente un système d'alimentation en air frais qui est réalisé de telle manière qu'il applique sur le premier et le troisième réservoir de pression, mais pas le deuxième réservoir de pression, de l'air frais.

8. Dispositif (1) selon la revendication précédente,
dans lequel le dispositif (1) présente un autre réservoir de pression, qui est adapté pour et se destine à appliquer un autre niveau de pression sur les préformes en matière plastique.

9. Dispositif (1) selon au moins l'une quelconque des revendications précédentes 7 et 8,
**caractérisé en ce que**
de l'air comprimé provenant des récipients en matière plastique peut être conduit dans au moins un réservoir de pression.
